# EUROPEAN PATENT APPLICATION

(11) **EP 1 223 122 A1**
(43) Date of publication of application: **17.07.2002**
(21) Application number: 01127274.7
(22) Date of filing: 16.11.2001
(51) Int. Cl.: B65G 47/31

(54) **Line for conveying a panel of wood or similar**

(30) Priority: 17.11.2000 IT BO000667
(71) Applicant: ISP Systems S.r.l., 61100 Pesaro (IT)
(72) Inventor: Bernardi, Paolo, 40138 Bologna (IT)
(74) Representative: Franzolin, Luigi

(57) **Abstract**

A line for conveying a panel (2) of wood or similar is defined by at least two conveying devices (7, 8) for feeding the panel (2) along a given path (P), and which are controlled selectively so that the respective traveling speeds are substantially equal when transferring the panel (2) between the two conveying devices (7, 8); at least one of the two conveying devices (7, 8) having a pneumatic suction device (14) for keeping the panel (2) in a given position.

## Description

The present invention relates to a line for conveying a panel of wood or similar.

More specifically, the present invention relates to a line for conveying a panel of wood or similar between two machines, to which the following description refers purely by way of example.

In the processing of wood panels, a conveyor line is known to be employed comprising at least two roller and/or belt conveyors, one for receiving the panel from a first machine, and the other for feeding the panel into and along a second machine; and a transfer station connecting the two conveyors.

Normally, the weight of the panel itself keeps it in contact with the conveyors, which travel at substantially different speeds owing to the normally different output rates of the machines.

Known lines of the type described above therefore have several drawbacks, foremost of which is the relatively unstable position of the panel on the conveyors, which may vary both when transferring the panel between the two conveyors, and when the conveyors are accelerated or decelerated over and above a given absolute value.

It is an object of the present invention to provide a line for conveying a panel of wood or similar, designed to eliminate the aforementioned drawbacks.

According to the present invention, there is provided a line for conveying a panel of wood or similar, comprising first and second conveying means for feeding said panel in a first given direction and along a given path, at least one of said first and second conveying means comprising pneumatic suction means to keep said panel in a given position; and a transfer station connecting said first and second conveying means; and
characterized by comprising control means for selectively controlling at least one of said first and second conveying means so that, when transferring said panel between said first and second conveying means, the respective traveling speeds of the first and second conveying means are substantially equal.

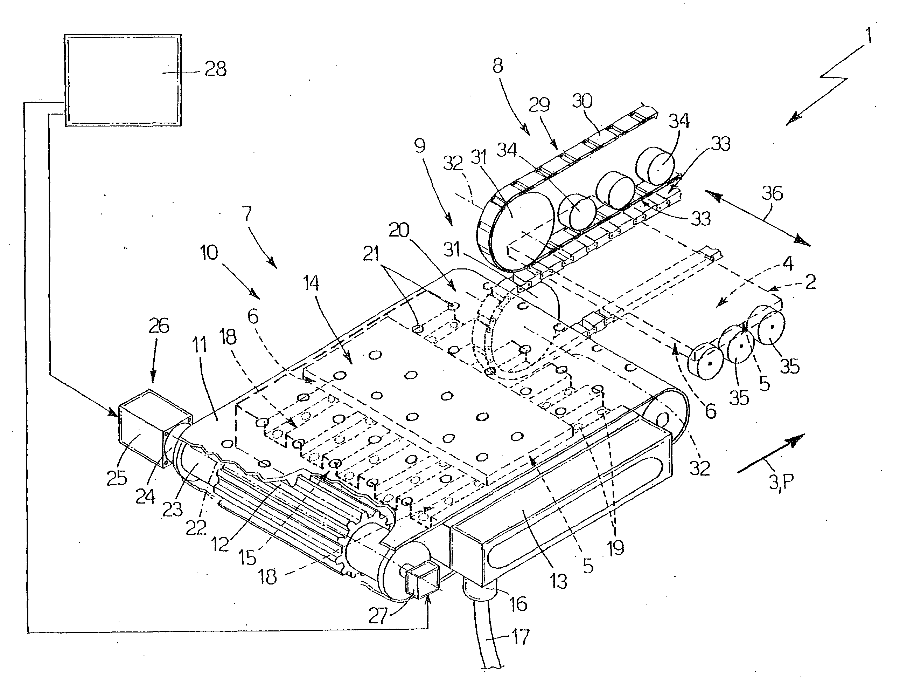

The present invention will be described by way of example with reference to the accompanying drawing showing a schematic view in perspective of a non-limiting embodiment.

Number 1 in the accompanying drawing indicates as a whole a line for conveying panels 2 of wood or similar along a path P and in a given direction 3.

Each panel 2 is substantially parallelepiped-shaped, and has two parallel major lateral faces 4; two minor lateral faces 5 parallel to each other and perpendicular to faces 4; and two minor lateral faces 6 parallel to each other and perpendicular to faces 4 and 5.

Line 1 comprises two conveying devices 7, 8, which are located in series, are connected to each other at a transfer station 9, and provide for feeding panels 2 successively along path P.

Device 7 comprises an endless conveyor 10, in turn comprising a belt 11 looped about two pulleys 12 and about an elongated plate 13 extending between pulleys 12 and forming part of a device 14 for retaining panels 2 on belt 11. Plate 13 is hollow, so as to define a chamber 15, which communicates with a known pneumatic suction device (not shown) via a fast-fit coupling 16 fitted to plate 13 and connecting chamber 15 to a feed pipe 17 of the pneumatic suction device (not shown).

The top surface of plate 13 has a number of longitudinal grooves 18 extending parallel to direction 3 and communicating with chamber 15 through holes 19 substantially perpendicular to direction 3.

Each panel 2 is placed on conveyor 10 in a given initial position, in which faces 5 are parallel to direction 3, and one of faces 4 contacts a top conveying branch 20 of belt 11, which has a number of through suction holes 21 corresponding with grooves 18 to enable branch 20 to retain panel 2 in said given position.

Pulleys 12 are mounted to rotate about respective axes 22 substantially parallel to each other and perpendicular to direction 3. More specifically, one of pulleys 12 is fitted to a supporting shaft 23 coaxial with respective axis 22 and connected in angularly-fixed manner, via the interposition of a reducer 24, to the output shaft (not shown) of a motor 25 for rotating pulley 12 about respective axis 22.

Motor 25 forms part of an actuating device 26, which also comprises a detecting unit 27 (in the example shown, a resolver) fitted to shaft 23 to detect, at each instant, the position of conveyor 10 and, therefore, of panels 2 along path P; and a control unit 28 for controlling operation of motor 25 as a function of the signal from unit 27.

Device 8 feeds panels 2 successively into and along a known edging machine (not shown), and comprises two chain conveyors 29, which are located one over the other, and have respective chains 30 movable in a common vertical plane.

Each chain 30 is looped about two pulleys 31 (only one shown in the accompanying drawing) having respective axes 32 parallel to each other and to axes 22, and one of which is powered in time with a pulley 31 of the other conveyor 29 to feed panels 2 at constant speed along the two conveyors 29. Each chain 30 has a conveying branch 33 substantially parallel to and facing the conveying branch 33 of the other chain 30 so as to engage each panel 2 by respective faces 4.

Device 8 also comprises a succession of pressure rollers 34 mounted idly on top of branch 33 of the top conveyor 29 to keep branch 33 in contact with the top faces 4 of panels 2; and a succession of supporting rollers 35 aligned in direction 3 and for supporting the underside of panels 2.

In a variation not shown, device 7 comprises a number of conveyors 10 aligned in a direction 36 substantially perpendicular to direction 3, and connected releasably to one another by means of respective plates 13. More specifically, the number of conveyors 10 depends on the size of panels 2 measured parallel to direction 36.

In actual use, since panels 2 are retained by suction on belt 11, the relative initial positions on belt 11 are relatively stable, so that conveyor 10 can be accelerated and decelerated to transfer panels 2 to station 9 as fast as possible and with no variation in the initial positions of panels 2.

Moreover, control unit 28 and detecting unit 27 control the speed of conveyor 10, so that, when transferring a panel 2 between belt 11 and chains 30, the traveling speed of conveyor 10 is substantially equal to that of chains 30.

## Claims

1. A line for conveying a panel (2) of wood or similar, comprising first and second conveying means (7, 8) for feeding said panel (2) in a first given direction (3) and along a given path (P), at least one of said first and second conveying means (7, 8) comprising pneumatic suction means (14) to keep said panel (2) in a given position; and a transfer station (9) connecting said first and second conveying means (7, 8); and
**characterized by** comprising control means (27, 28) for selectively controlling at least one of said first and second conveying means (7, 8) so that, when transferring said panel (2) between said first and second conveying means (7, 8), the respective traveling speeds of the first and second conveying means (7, 8) are substantially equal.

2. A line as claimed in Claim 1, wherein said first conveying means (7) comprise at least one endless conveyor (10), and actuating means (25) for driving the conveyor (10) and feeding said panel (2) at a given first speed; said control means (27, 28) controlling said actuating means (25) to selectively control said first speed.

3. A line as claimed in Claim 2, wherein said second conveying means (8) are driven so as to feed said panel (2) at a substantially constant second speed; said control means (27, 28) comprising detecting means (27) for controlling a position of said panel (2) along said first conveying means (7), so that, when transferring the panel (2) between said first and second conveying means (7, 8), said first speed substantially equals said second speed.

4. A line as claimed in any one of the foregoing Claims, wherein said first conveying means (7) comprise a number of endless conveyors (10) aligned in a second direction (36) substantially perpendicular to said first direction (3), and connected releasably to one another; the number of said conveyors (10) depending on the size of said panel (2) measured parallel to said second direction (36).

5. A line as claimed in any one of the foregoing Claims, wherein said second conveying means (8) feed said panel (2) into and along an edging machine.
